**Europäisches Patentamt**

**European Patent Office**

**Office européen des brevets**

(11) Veröffentlichungsnummer: **0 006 434**
B1

(12) **EUROPÄISCHE PATENTSCHRIFT**

(45) Veröffentlichungstag der Patentschrift:
20.01.82

(21) Anmeldenummer: **79101421.0**

(22) Anmeldetag: **10.05.79**

(51) Int. Cl.³: **B 23 G 5/20**

(54) Aufsteck-Anfaswerkzeug für Gewindebohrer.

(30) Priorität: **23.06.78 CH 6860/78**

(43) Veröffentlichungstag der Anmeldung:
**09.01.80 Patentblatt 80/1**

(45) Bekanntmachung des Hinweises auf die Patenterteilung:
**20.01.82 Patentblatt 82/3**

(84) Benannte Vertragsstaaten:
**AT BE DE FR GB IT LU NL SE**

(56) Entgegenhaltungen:
**DE-C-610 835**
**DE-C-642 577**
**DE-U-7 333 386**
**US-A-2 767 412**
**US-A-3 233 260**

(73) Patentinhaber: **GEORG FISCHER AKTIENGESELLSCHAFT**, Mühlentalstrasse 105, **CH-8201 Schaffhausen (CH)**

(72) Erfinder: **Kienzler, Johann, Weiden Strasse 11, D-7701 Mühlhausen (DE)**
Erfinder: **Oexle, Werner, Silcherstrasse 10, D-7700 Singen (DE)**

ACTORUM AG.

Aufsteck-Anfaswerkzeug für Gewindebohrer

Die Erfindung betrifft ein Anfaswerkzeug zum Aufstecken auf einteilige Gewindebohrer mit einem in Drehrichtung des Gewindeschneiders arbeitenden Anfasfräser, welcher in den Nuten des Gewindebohrers zu liegen kommt, mit einem axial einstellbaren Anschlagring und einer zwischen dem Anfasfräser und dem Anschlagring vorgespannten Feder.

Für das Anfasen von Bohrungen bzw. Gewindebohrungen z.B. bei Fittings oder Rohren ist es bekannt, Gewindebohrer mit Anfasfräsern zu verwenden, welche im gleichen Arbeitsgang bzw. unmittelbar nach dem Gewindeschneiden bei gleichbleibender Drehrichtung die erforderliche Fase erzeugen.

Es ist ein Anfaswerkzeug der eingangs genannten Art bekanntgeworden (deutsches Gebrauchsmuster Nr. 1 166 877), dessen Anschlagring direkt am Schaft des Gewindebohrers mittels einer Stellschraube festklemmbar ist und der Anfasfräser mit einer Anschlagfläche an den Bund zwischen Schaft und Schneidgewinde des Gewindebohrers mittels der Feder angedrückt wird. Die Federvorspannkraft ist hier zwar durch den verschiebbaren Anschlagring einstellbar, die Lage der Anfasschneide ist jedoch gegenüber dem Gewindebohrer nicht einstellbar. Bei unterschiedlich langen Gewindebohrern, insbesondere beim Nachschleifen der Gewindebohrer, muss bei Einhaltung einer von der Fase ausgehenden gleichbleibenden Gewindelänge am Werkstück ein neues Anfaswerkzeug mit von der Anschlagfläche anderen Längenmassen verwendet werden.

Diese mangelnde Einstellbarkeit des Anfaswerkzeuges ist zwar bei einem weiter bekannten Anfaswerkzeug (deutsches Gebrauchsmuster Nr. 1 280 447) behoben, doch ist hierbei das gesamte Anfaswerkzeug auf dem Gewindeschneidteil des Gewindebohrers angeordnet, wodurch dessen nutzbare Länge wesentlich eingeschränkt wird. Das Anfaswerkzeug wird hierbei mittels Klemmschrauben auf dem Schneidgewinde festgeklemmt, wodurch eine feine axiale Einstellbarkeit des Anfaswerkzeuges gegenüber dem Gewindebohrer nicht gegeben ist. Ausserdem ist mittels der Klemmschrauben eine Beschädigung des Schneidgewindes des Gewindebohrers möglich.

Die DE-C-642 577 zeigt einen einteiligen Gewindebohrer mit einem darauf verschiebbaren Anfaswerkzeug, welches mittels einer Feder am Spindelkopf gehalten ist und mit dieser in axialer Richtung verstellbar ist. Hierbei ist zwar ein grösserer Verstellweg zur Verwendung von kurzen oder langen Gewindebohrern möglich, aber da die Feder gegenüber einem Feingewinde eine sehr grosse Steigung aufweist, ist eine axiale Feineinstellung des Anfaswerkzeuges nicht möglich.

Nachteilig ist ausserdem, dass sich bei der Verstellung die Federkennlinie verändert und dass das Anfaswerkzeug nicht mit einer Vorspannung der Feder gegen einen Anschlag gedrückt wird. Dieser Gegenstand enthält somit nicht alle Merkmale, die im Oberbegriff des Anmeldungsgegenstandes angeführt sind.

Da der Anfasvorgang nicht mit einer Vorspannkraft am Anfaswerkzeug beginnt, sondern die Axialkraft von Null ansteigt, neigt das Anfaswerkzeug zum Rattern, und es können keine sauberen und genauen Anfasungen damit hergestellt werden.

Aufgabe der vorliegenden Erfindung ist die Schaffung eines Aufsteck-Anfaswerkzeuges der eingangs genannten Art, dessen Schneidkante gegenüber dem Gewindebohrer in axialer Richtung feinfühlig einstellbar ist und für unterschiedlich lange Gewindebohrer geeignet ist, wobei auch durch die Anwendungsmöglichkeit bei kurzen Gewindebohrern ein guter Nutzungsgrad erreicht werden soll.

Zur Lösung dieser Aufgabe sind die im kennzeichnenden Teil des Patentanspruches 1 angegebenen Gestaltungsmerkmale für die Erfindung vorgesehen.

Eine bevorzugte Ausführungsform ergibt sich durch den abhängigen Anspruch.

Durch die erfindungsgemässe Einstellbarkeit in axialer Richtung mittels der Gewindebüchse und des Anschlagringes wird eine Feineinstellbarkeit des Anfaswerkzeuges erreicht. Hierdurch lässt sich nun die für eine bestimmte Anfastiefe erforderliche Federkraft genau einstellen, wodurch eine masshaltige und reproduzierbare Anfastiefe gewährleistet wird. Gleichzeitig wird damit auch die von der Fase ausgehende gewünschte Gewindelänge im Werkstück eingestellt.

Die Verwendung unterschiedlich langer Gewindebüchsen und deren leichte Auswechselmöglichkeit ermöglichen die Verwendung des Anfaswerkzeuges bei sehr unterschiedlich langen Gewindebohrern, wodurch eine optimale Ausnutzung der Gewindebohrer durch Nachschleifen gewährleistet ist.

Die Erfindung ist in den beiliegenden Zeichnungen beispielsweise dargestellt und nachfolgend beschrieben. Es zeigen:

Fig. 1 ein Anfaswerkzeug im Längsschnitt aufgesteckt auf einen langen Gewindebohrer,

Fig. 2 ein Anfaswerkzeug entsprechend Fig. 1 aufgesteckt auf einen kurzen Gewindebohrer und

Fig. 3 eine Ansicht A von Fig. 1 oder Fig. 2.

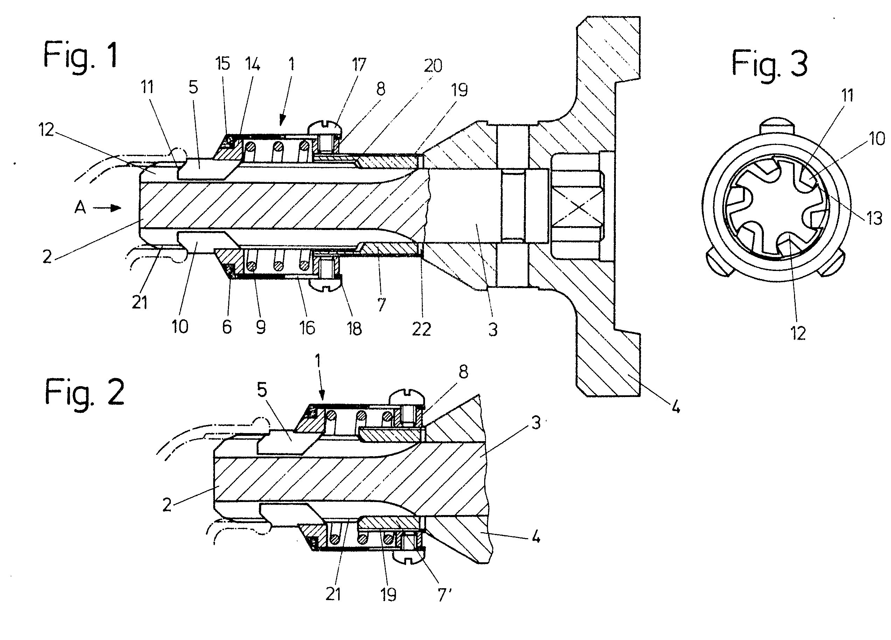

Fig. 1 zeigt ein Anfaswerkzeug 1 im Längsschnitt, welches auf einem Gewindebohrer 2 aufgesteckt ist. Der Gewindebohrer weist einen zylindrischen Schaft 3 auf, welcher in einem Aufnahmeflansch 4 zwecks Befestigung an z.B. einer Gewindeschneidmaschine eingesteckt und gehalten ist.

Das Anfaswerkzeug 1 besteht aus einem Anfasfräser 5 mit einer mit ihm fest verbundenen Hülse 6, einer Gewindebüchse 7, einem Anschlagring 8 und einer zwischen Anfasfräser 5 und Anschlagring 8 angeordneten Druckfeder 9. Der Anfasfräser 5 weist Schneidteile 10 mit Anfas-Schneidkanten 11 auf, welche in Nuten 12 des Gewindebohrers 2 zu liegen kommen, was die Mitnahme des Anfasfräsers 5 bewirkt. Vorzugsweise sind so viele Schneidkanten 11 angeordnet, als der Gewindebohrer 2 Nuten 12 aufweist.

Wie aus der Fig. 3 ersichtlich, sind die Anfas-Schneidkanten 11 mit gleicher Schneidrichtung angeordnet wie die Schneidkanten 13 des Gewindebohrers 2. Die Schneidteile 10 und der Ring 14, welcher einen Anschlag-Bund 15 für die Hülse 6 aufweist, bilden den eigentlichen Anfasfräser 5.

Die Hülse 6 ist auf dem Ring 14 des Anfasfräsers 5 durch eine vorzugsweise Klebeverbindung befestigt und weist an ihrem freien Ende umfangsmässig verteilt Schlitze 16 auf. Der Anschlagring 8 weist entsprechend der Anzahl Schlitze 16 radial angeordnete Stellschrauben 17 auf, welche in die Schlitze 16 eingreifen, wodurch ein Anschlag 18 für den unter einer Vorspannung der Druckfeder 9 stehenden Anfasfräser 5 gebildet wird.

Die Gewindebüchse 7 und der Anschlagring 8 weist ein, vorzugsweise als Feingewinde ausgebildetes Gewinde 19 auf, wodurch der Anschlagring 8 in axialer Richtung einstellbar ist. Die Gewindebüchse 7 ist auf dem Schaft 3 leicht auswechselbar angeordnet, wobei sie in axialer Richtung durch den Aufnahmeflansch 4 gehalten wird.

Durch die Verwendung unterschiedlich langer Gewindebüchsen 7 kann das Anfaswerkzeug 1 bei langen als auch bei kurzen Gewindebohrern eingesetzt werden.

Bei dem in Fig. 1 verwendeten langen Gewindebohrer 2 weist die Gewindebüchse 7 eine Ausdrehung 20 auf, wodurch sie über eine Teillänge des Schneidgewindes 21 schiebbar ist, bis sie an dem Absatz zwischen dem Schneidgewinde 21 und dem Schaft 3 anschlägt. Durch Verdrehen der Gewindebüchse 7 z.B. mittels eines in Ausnehmungen 22 der Gewindebüchse eingreifenden Werkzeuges ist die axiale Lage des Anfasfräsers 5 gegenüber dem Gewindebohrer 2 fein einstellbar.

Fig. 2 zeigt das Anfaswerkzeug 1 zusammen mit einem kurzen, bereits öfters nachgeschliffenen Gewindebohrer 2, wobei eine kurze Gewindebüchse 7' auf den Schaft 3 aufgesteckt ist, deren Gewinde 19 vom Ende des Schneidgewindes 21 bis zum Aufnahmeflansch 4 reicht. Die kurze Gewindebüchse 7' ermöglicht die Anordnung des Anfasfräsers 5 am Ende des Schneidgewindeteils des Gewindebohrers 2.

Durch die bereits beschriebene gleichgerichtete Anordnung der Schneidkanten des Gewindebohrers mit der Anfas-Schneidkante des Anfaswerkzeuges erfolgt das Anfasen während dem Gewindeschneiden. Im Eil- oder Patronenrücklauf des Gewindebohrers erfolgt kein Zerspanungsvorgang mehr. Dies ergibt saubere Anfasungen und erlaubt die Verwendung moderner Bearbeitungsmaschinen mit Eil-Rücklauf.

## Patentansprüche

1. Anfaswerkzeug zum Aufstecken auf einteilige Gewindebohrer (2) mit einem in Drehrichtung des Gewindeschneiders arbeitenden Anfasfräser (5), welcher in den Nuten (12) des Gewindebohrers (2) zu liegen kommt, mit einem axial einstellbaren Anschlagring (8) und einer zwischen dem Anfasfräser (5) und dem Anschlagring (8) vorgespannten Feder (9), dadurch gekennzeichnet, dass der Anschlagring (8) mittels eines Gewindes (19) auf einer auf den Schaft (3) des Gewindebohrers (2) aufschiebbaren Gewindebüchse (7, 7') zwecks feiner axialer Einstellung des Anfaswerkzeuges (1) gegenüber dem Gewindebohrer (2) verstellbar ist, wobei eine kurze Gewindebüchse (7') mit einem nur im Bereich des zylindrischen Schaftes (3) angeordneten Gewinde (19) durch eine längere Gewindebüchse (7) austauschbar ist, welche eine Ausdrehung (20) aufweist und mit dem am Aussendurchmesser angeordneten Gewinde (19) über eine Teillänge des Schneidgewindes (21) des Gewindebohrers (2) schiebbar ist.

2. Anfaswerkzeug nach Anspruch 1, dadurch gekennzeichnet, dass der Anschlagring (8) mindestens eine in radialer Richtung angeordnete Stellschraube (17) aufweist, welche in einen Schlitz (16) einer am Anfasfräser (5) befestigten Hülse (6) eingreift.

## Claims

1. Chamfer tool for placing on to one-part taps (2) with a chamfer cutter (5), which operates in the direction of rotation of the tap thread, and comes to rest in the grooves (12) of the tap (2), with an axially adjustable stop ring (8) and a prestressed spring (9) between the chamfer cutter (5) and the stop ring (8), characterised in that the stop ring (8) is displaceable by means of a thread (19) on a threaded bush (7, 7') which can be pushed on to the shaft (3) of the tap (2), for the purpose of fine axial adjustment of the chamfer tool (1) in relation to the tap (2), whereby a short threaded bush (7') with a thread (19) arranged only in the area of the cylindrical shaft (3) can be exchanged for a longer threaded bush (7), which has a recess (20) and can be pushed with the thread (19) arranged on the outer diameter over part of the length of the cutting thread (21) of the tap (2).

2. Chamfer tool according to claim 1, characterised in that the stop ring (8) has at least one adjusting screw (17) arranged in a radial direction, which engages in a slot (16) in a sleeve (6) secured to the chamfer cutter (5).

## Revendications

1. Outil à chanfreiner destiné à être emboîté sur un taraud monobloc (2), comportant une fraise de chanfreinage (5) travaillant dans le sens de rotation de l'outil de filetage et qui vient se placer dans les rainures (12) du taraud (2), une bague de butée (8) réglable axialement et un ressort précontraint (9) entre la fraise de chanfreinage (5) et la bague de butée (8), caractérisé en ce que la bague de butée (8) est déplacable à l'aide d'un filetage (19) sur un manchon fileté (7, 7') pouvant être engagé sur la tige (3) du taraud (2) en vue d'un réglage axial précis de l'outil de chanfreinage (1) par rapport au taraud (2), un court manchon fileté (7'), comportant un filetage (19) disposé seulement dans la zone de la tige cylindrique (3), pouvant être remplacé par un manchon fileté plus long (7), qui comporte un alésage (20) et qui peut être engagé par le filetage (19) disposé sur la périphérie extérieure sur une partie de la longueur du filetage de coupe (21) du taraud (2).

2. Outil à chanfreiner selon la revendication 1, caractérisé en ce que la bague de butée (8) comporte au moins une vis de réglage (17) orientée dans une direction radiale et qui s'engage dans une fente (19) d'un fourreau (6) fixé sur la fraise de chanfreinage (5).

Fig. 3

Fig. 1

Fig. 2